# EUROPÄISCHE PATENTSCHRIFT

(11) **EP 1 447 201 B1**
(45) Veröffentlichungstag und Bekanntmachung des Hinweises auf die Patenterteilung: **22.08.2007**
(21) Anmeldenummer: 04001138.9
(22) Anmeldetag: 21.01.2004
(51) Int. Cl.: B29C 45/50

(54) **Einspritzaggregat für eine Spritzgiessmaschine**
Injection unit for an injection moulding machine
Unité d'injection pour une presse à mouler par injection

(30) Priorität: 05.02.2003 DE 10304578
(43) Veröffentlichungstag der Anmeldung: 18.08.2004
(73) Patentinhaber: Demag Ergotech GmbH, 90571 Schwaig (DE)
(72) Erfinder: Ickinger, Georg, Dipl.-Ing., 8010 Graz (AT)
(74) Vertreter: Wilhelm, Ludwig

(56) Entgegenhaltungen:
- DE-A- 10 213 679
- JP-A- 61 140 363
- US-B1- 6 394 780
- US-B1- 6 533 572
- PATENT ABSTRACTS OF JAPAN vol. 016, no. 057 (M-1210), 13. Februar 1992 (1992-02-13) & JP 03 256713 A (TOSHIBA MACH CO LTD), 15. November 1991 (1991-11-15)

## Beschreibung

Die Erfindung bezieht sich auf ein Einspritzaggregat für eine Spritzgießmaschine, nach dem Oberbegriff des Patentanspruchs 1.

Aus der US 6 309 203 B1 ist ein Einspritzaggregat dieser Art bekannt, welches über einen U-förmigen Rahmen, an dessen einem Schenkel die Tragbrücke für den Plastifizierzylinder und an dessen anderem Schenkel der Hubantrieb befestigt ist, linear verschieblich auf dem Maschinenbett gelagert und bei welchem der zwischen Tragbrücke und Hubantrieb angeordnete Drehantrieb auf zueinander parallelen, zwischen den Schenkeln des U-Rahmens verlaufenden Führungsholmen hubbeweglich abgestützt ist.

Eine andere Art von Linearführungen eines solchen Einspritzaggregats ist u.a. aus der DE 198 31 482 C1 bekannt. Dabei sind die Einspritzkomponenten des Einspritzaggregats, also der Plastifizierzylinder und der Hubantrieb einerseits und hiervon unabhängig auch der hubbetätigte, mit der Plastifizierschnecke verkoppelte Drehantrieb andererseits an ein und denselben, vom Maschinenbett hochgeständerten Führungsrohren linear beweglich angeordnet.

Aus der JP-A-61140363 ist ein Einspritzaggregat bekannt, bei welchem in einem mit dem Plastifizierzylinder verbundenen Gehäuse ein Dreh- und ein Hubantrieb axial fluchtend hintereinander angeordnet sind. Innerhalb des Gehäuses und oberhalb der zentralen Achse des Einspritzaggregats erstreckt sich eine Führungsstange, an der der Drehantrieb hubbeweglich gelagert ist.

Bei diesen bekannten Einspritzaggregaten besteht die Gefahr, dass sich die tragenden Konstruktionselemente unter der Wirkung der betriebsbedingt hohen Antriebs- und Reaktionsmomente des Dreh- und des Hubantriebs verformen und daher die Einspritzkomponenten ihre axial fluchtende Ausrichtung verlieren, was erhebliche Funktionsstörungen oder gar einen Funktionsausfall des gesamten Einspritzaggregats zur Folge haben kann.

Aufgabe der Erfindung ist es, bei einem Einspritzaggregat der eingangs genannten Art die Funktionssicherheit dadurch zu erhöhen, dass Fehlausrichtungen der erwähnten Einspritzkomponenten unter Last wirksam unterbunden werden.

Diese Aufgabe wird erfindungsgemäß durch das im Patentanspruch 1 gekennzeichnete Einspritzaggregat gelöst.

Erfindungsgemäß ist der tragende Bestandteil des Einspritzaggregats eine vor allem auch in Torsionsrichtung hochsteife, die Einspritzkomponenten aufnehmende Gehäuseschale, über die die einwirkenden Antriebs- und Reaktionsmomente der Schneckenantriebe verformungsfrei abgesetzt und das Einspritzaggregat an der maschinenbettseitigen Linearführung längsverschieblich abgestützt wird, wodurch sichergestellt wird, dass die koaxiale Ausrichtung der hintereinandergereihten Einspritzkomponenten auch unter den betriebsbedingt hohen Belastungen erhalten bleibt. Desweiteren ist der Drehantrieb an mindestens zwei symmetrisch zu und in einer gemeinsamen Ebene mit der zentralen Achse des Einspritzaggregats angeordneten Führungsbahnen hubbeweglich gelagert. Hierdurch wird eine zusätzliche Sicherheitsmaßnahme für den Fall geschaffen, dass sich die Führungsbahnen unter der Drehmomentenbelastung des Drehantriebs - wenn auch wegen der hochsteifen Gestaltung der Gehäuseschale nur geringfügig - verformen sollten, weil dann diese Verformungen gegensinnig zueinander und radialsymmetrisch zur zentralen Achse des Einspritzaggregats verlaufen und daher ohne Einfluss auf die axial fluchtende Ausrichtung der Einspritzkomponenten bleiben.

Im Hinblick auf eine konstruktiv besonders verwindungssteife Gestaltung der Gehäuseschale ist diese zumindest im Bereich des Hubantriebs zweckmäßigerweise als im Querschnitt geschlossener Hohlträger ausgebildet.

Zwar können sowohl die Gehäuseschale als auch hiervon unabhängig der Drehantrieb an der maschinenbettseitigen Linearführung verschieblich abgestützt sein, vorzugsweise ist der Drehantrieb jedoch an der Gehäuseschale selbst hubbeweglich gelagert, so dass sämtliche, aus den Schneckenantrieben resultierenden Belastungen auf dem Weg über die Gehäuseschale ausgeglichen und daher die maschinenbettseitige Linearführung von Lagerkräften weitgehend entlastet wird und im Wesentlichen nur das Eigengewicht des Einspritzaggregats abstützen muss.

In besonders baugünstiger Weise besteht der Hubantrieb aus einem Rotationsmotor mit einem von der Gehäuseschale gebildeten Motorgehäuse sowie einem dem Rotationsmotor nachgeschalteten Spindeltrieb, und im Hinblick auf eine leichtgängige Lagerung ist die Gehäuseschale und/oder der Drehantrieb auf der jeweils zugeordneten Führungsbahn vorzugsweise rollengelagert.

Die Erfindung wird nunmehr anhand zweier Ausführungsbeispiele in Verbindung mit der Zeichnung näher erläutert. Es zeigen in stark schematisierter Darstellung:
- **Fig. 1**: ein erfindungsgemäß ausgebildetes Einspritzaggregat im Längsschnitt gemäß einer ersten, bevorzugten Ausführungsform;
- **Fig. 2**: eine perspektivische Darstellung des in Fig. 1 gezeigten Einspritzaggregats; und
- **Fig. 3**: eine der Fig. 2 entsprechende perspektivische Darstellung eines weiteren Ausführungsbeispiels der Erfindung.

Das in den Fig. gezeigte Einspritzaggregat einer ansonsten nicht näher gezeigten Spritzgießmaschine enthält als Hauptbestandteile eine in einem Plastifizierzylinder 1 angeordnete Plastifizierschnecke 2 (von denen jeweils nur die rückwärtigen Teilstücke dargestellt sind), sowie einen Dreh- und einen Hubantrieb 3, 4 für die Plastifizierschnecke 2 in zueinander koaxialer Anordnung. Der Dreh- und der Hubantrieb 3, 4 sind von einer im Bereich des Hubantriebs 4 zylindrischen und auf Seiten des Plastifizierzylinders 1 im Querschnitt halbkreisförmigen Gehäuseschale 5 umschlossen, an deren vorderem Ende eine Tragbrücke 6 für den Plastifizierzylinder 1 befestigt ist.

Für beide Antriebe 3 und 4 sind elektrische Hohlwellenmotoren vorgesehen, wobei das Gehäuse des Hubantriebs 4 durch die Gehäuseschale 5 gebildet wird, während der Drehantrieb 3 mit seinem Gehäuse 7 auf symmetrisch zu und in einer gemeinsamen Ebene mit der zentralen Achse A-A des Einspritzaggregats angeordneten Führungsbahnen 8 der Gehäuseschale 5 hubbeweglich rollengelagert ist. Die Hohlwellenrotoren 9 und 10 des Dreh- und Hubantriebs 3 bzw. 4 sind jeweils einseitig durch eine Stirnwand 11 bzw. 12 verschlossen und mit ihren offenen Rotorenden einander zugekehrt. Der Hohlwellenrotor 10 ist an seiner Stirnwand 12 mit einem zentralen Lagerzapfen 13 versehen, über den er unter Zwischenschaltung gegensinnig vorverspannter, längs- und querkraftübertragender Wälzlager 14, 15 an einem Gehäusedeckel 16 der Gehäuseschale 5 drehbar, aber axial unverschieblich abgestützt ist. Der Hohlwellenrotor 9 des Drehantriebs 3 ist auf seiner inneren Mantelfläche an einer am Gehäuse 7 befestigten und in den Rotor-Innenraum eingreifenden Traghülse 17 drehbar gelagert, und zwar über ebenfalls längs- und querkraftübertragende Wälzlager 18, 19.

Der Drehwinkel des Rotors 9 und somit auch der mit der Rotor-Stirnwand 11 fest verbundenen Plastifizierschnecke 2 wird durch einen Drehgeber 20 gemessen, welcher zwischen der Stirnwand 11 und dem verschlossenen Ende der Traghülse 17 angeordnet ist.

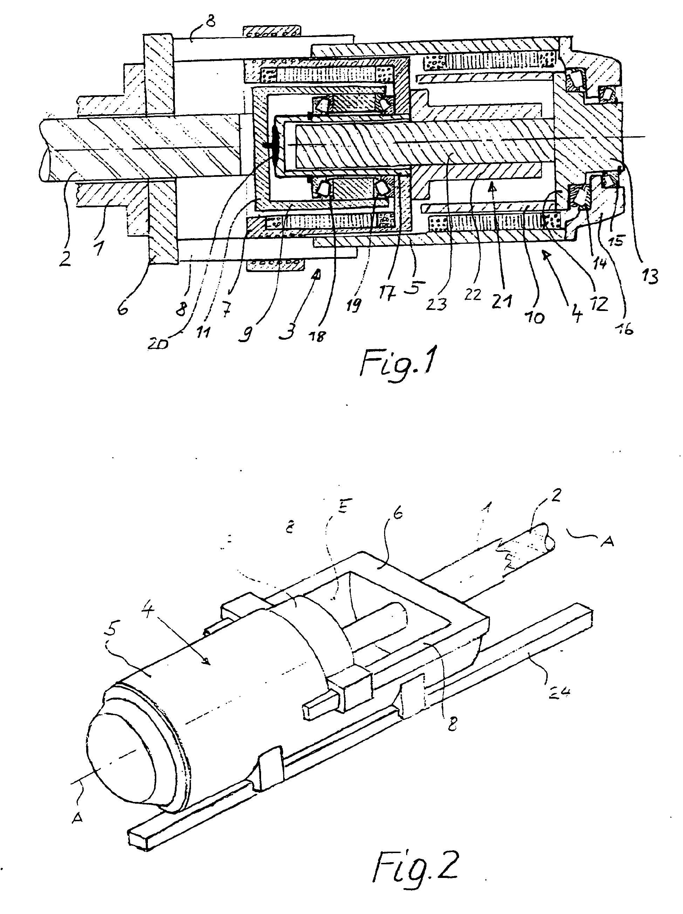

Zur Umsetzung der Drehbewegung des Rotors 10 in eine Hubbewegung des Drehantriebs 3 und demgemäß auch der Plastifizierschnecke 2 dient ein insgesamt mit 21 bezeichneter Kugelspindeltrieb, dessen Spindelmutter 22 im Bereich der Traghülse 17 fest mit dem Gehäuse 7 des Drehantriebs 3 verbunden ist und in der in Fig. 1 dargestellten Rückhublage des Drehantriebs 3 in den Hohlwellen-Innenraum des Rotors 10 eingreift, während die an der Stirnwand 12 des Rotors 10 befestigte Spindelwelle 23 in dieser Position mit ihrem freien Ende in die Traghülse 17 im Hohlwellen-Innenraum des Rotors 9 eintaucht. Durch den Einbau des Spindeltriebs 21 in den Grenzen beider Hohlwellen-Innenräume und die Anordnung der Wälzlager 18, 19 auf der Innenseite der Magnetpolanordnung des Rotors 9 wird die Baugröße des Einspritzaggregats deutlich verringert.

Da die Antriebs- und Reaktionskräfte der Einspritzkomponenten über die nicht nur zug-, sondern vor allem auch hochgradig torsions- und biegesteife Gehäuseschale 5 verformungsfrei ausgeglichen werden, muss die maschinenbettseitige Linearführung im Wesentlichen nur das Eigengewicht des Einspritzaggregats abstützen, ist im Übrigen aber von weiteren Krafteinwirkungen entlastet, so dass eine einfache, auf dem Maschinenbett befestigte Führungsschiene 24 ausreicht, auf der die Gehäuseschale 5 über - nicht gezeigte - Rollen- oder Gleitlager linear verschieblich geführt ist.

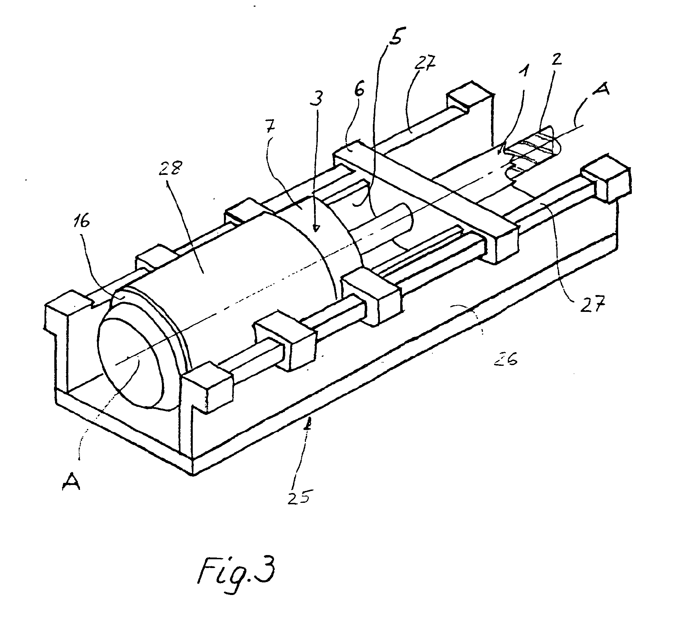

Das Ausführungsbeispiel nach Fig. 3, wo einander entsprechende Komponenten durch das gleiche Bezugszeichen wie bei dem oben beschriebenen Einspritzaggregat gekennzeichnet sind, unterscheidet sich von diesem in erster Linie durch eine andersartige, maschinenbettseitige Linearführung 25, welche aus einer kastenförmigen, am Maschinenbett befestigten Tragstruktur 26 mit am oberen Rand angeordneten Führungsschienen 27 besteht, auf denen einerseits die Gehäuseschale 5 im Bereich der Tragbrücke 6 und des zylindrisch geschlossenen Gehäuseteils 28 und andererseits hiervon unabhängig das Gehäuse 7 des Drehantriebs 3 - jeweils ebenfalls über Rollen- oder Gleitlagerlängsverschieblich abgestützt ist. Zusätzlich zu der hochsteifen Gestaltung der Gehäuseschale 5 ist das Einspritzaggregat gegen verformungsbedingte Fehleinstellungen in der axial fluchtenden Ausrichtung der Einspritzkomponenten dadurch gesichert, dass die beiden Führungsschienen 27 auf ihrer gesamten Länge über die Tragstruktur 26 am Maschinenbett abgestützt sind und wiederum symmetrisch zu und in einer gemeinsamen Ebene mit der zentralen Achse A-A des Einspritzaggregats verlaufen. Im Übrigen ist die Bau- und Funktionsweise die gleiche wie bei dem ersten Ausführungsbeispiel.

## Patentansprüche

1. Einspritzaggregat für eine Spritzgießmaschine, mit einem Plastifizierzylinder einschließlich einer Plastifizierschnecke, einem elektromotorischen, die Plastifizierschnecke in Drehrichtung antreibenden und gemeinsam mit dieser gegenüber dem Plastifizierzylinder hubbeweglich gelagerten Drehantrieb sowie mit einem elektromechanischen, gehäuseseitig mit dem Plastifizierzylinder zugfest verkoppelten und zusammen mit diesem längsverschieblich an einer maschinenbettseitigen Linearführung abgestützten Hubantrieb für die Plastifizierschnecke und den Drehantrieb, wobei die Plastifizierschnecke, der Drehantrieb und der Hubantrieb koaxial zueinander angeordnet sind, wobei der Plastifizierzylinder (1) und der Hubantrieb (4) durch eine verwindungssteif gestaltete, den Drehantrieb (3) hubbeweglich aufnehmende Gehäuseschale (5) miteinander verbunden und über diese längsverschieblich an der maschinenbettseitigen Linearführung (24; 25) abgestützt sind, **dadurch gekennzeichnet, dass** der Drehantrieb (3) an symmetrisch zu und in einer gemeinsamen Ebene mit der zentralen Achse (A-A) des Einspritzaggregats angeordneten Führungsbahnen (8; 27) hubbeweglich gelagert ist.

2. Einspritzaggregat nach Anspruch 1, **dadurch gekennzeichnet, dass** die Gehäuseschale (5) zumindest teilweise als im Querschnitt geschlossener Hohlträger ausgebildet ist.

3. Einspritzaggregat nach Anspruch 1 oder 2, **dadurch gekennzeichnet, dass** der Drehantrieb (3) an fest mit der Gehäuseschale (5) verbundenen Führungsbahnen (8) hubbeweglich gelagert ist.

4. Einspritzaggregat nach Anspruch 1 oder 2, **dadurch gekennzeichnet, dass** der Drehantrieb (3) unabhängig von der Gehäuseschale (5) an der maschinenbettseitigen Linearführung (27) hubbeweglich gelagert ist.

5. Einspritzaggregat nach einem der vorhergehenden Ansprüche, **dadurch gekennzeichnet, dass**
der Hubantrieb (4) aus einem Rotationsmotor mit einem von der Gehäuseschale (5) gebildeten Motorgehäuse sowie einem dem Rotationsmotor nachgeschalteten Spindeltrieb (21) besteht.

6. Einspritzaggregat nach einem der vorhergehenden Ansprüche, **dadurch gekennzeichnet, dass**
die Gehäuseschale (5) und/oder der Drehantrieb (3) auf der jeweils zugeordneten Führungsbahn (8, 24; 27) rollengelagert ist.

## Claims

1. An injection unit for an injection moulding machine comprising a plasticating cylinder including a plasticating screw, an electric-motor rotary drive which drives the plasticating screw in the direction of rotation and which is mounted such that it can be raised together with said screw with respect to the plasticating cylinder, as well as an electromechanical lifting drive for the plasticating screw and the rotary drive which is coupled to the plasticating cylinder in a tension-proof manner on the housing side and which is supported longitudinally displaceably together with said cylinder on the machine bed side, wherein the plasticating screw, the rotary drive and the lifting drive are arranged coaxially with respect to one another, the plasticating cylinder (1) and the lifting drive (4) are interconnected by a housing shell (5), which is configured as torsionally stiff and which receives the rotary drive (3) so that it can execute a lifting movement, and are supported longitudinally displaceably by means of said shell on the linear guide (24; 25) on the machine bed side, **characterised in that** the rotary drive (3) is mounted so that it can execute a lifting movement on guide tracks (8; 27) arranged symmetrically to and in a common plane with the central axis (A-A) of the injection unit.

2. The injection unit according to claim 1, **characterised in that** the housing shell (5) is formed at least partly as a hollow support having a closed cross-section.

3. The injection unit according to claim 1 or 2, **characterised in that** the rotary drive (3) is mounted securely on guide tracks (8) connected to the housing shell (5) so that it can execute a lifting movement.

4. The injection unit according to claim 1 or 2, **characterised in that** the rotary drive (3) is mounted independently of the housing shell (5) on the linear guide (27) on the machine bed side so that it can execute a lifting movement.

5. The injection unit according to any one of the preceding claims, **characterised in that** the lifting drive (4) consists of a rotary motor comprising a motor housing formed by the housing shell (5) and a screw link actuator (21) downstream of the rotary motor.

6. The injection unit according to any one of the preceding claims, **characterised in that** the housing shell (5) and/or the rotary drive (3) are roller-mounted on the respectively allocated guide track (8, 24; 27).

## Revendications

1. Unité d'injection pour presse à mouler par injection, comportant un cylindre de plastification incluant une vis de plastification, une commande rotative électromotorisée entraînant la vis de plastification dans le sens de rotation et s'appuyant avec celle-ci avec mobilité de course par rapport au cylindre de plastification ainsi qu'une commande de levage électromotorisée couplée au niveau du boîtier et avec résistance à la traction au cylindre de plastification et s'appuyant avec celui-ci avec mobilité longitudinale sur un guide linéaire placé au niveau du banc de la machine pour la vis de plastification et la commande rotative, la vis de plastification, la commande rotative et la commande de levage étant disposées coaxialement les unes par rapport aux autres, le cylindre de plastification (1) et la commande de levage (4) étant reliés entre eux par une coque de boîtier (5) à conformation rigide à la torsion et recevant la commande rotative (3) avec mobilité de course et s'appuyant par celle-ci avec mobilité longitudinale sur le guide linéaire placé au niveau du banc de la machine (24 ; 25),
**caractérisée en ce que** la commande rotative (3) s'appuie symétriquement dans des voies de guidage (8 ; 27) disposées symétriquement à et dans un plan commun avec l'axe central (A-A) de l'unité d'injection.

2. Unité d'injection selon la revendication 1,
**caractérisée en ce que**
la coque de boîtier (5) est réalisée du moins partiellement sous forme d'un support creux à section transversale fermée.

3. Unité d'injection selon la revendication 1 ou 2,
**caractérisée en ce que**
la commande rotative (3) s'appuie avec mobilité de course sur des voies de guidage (8) rattachées fixement à la coque de boîtier (5).

4. Unité d'injection selon la revendication 1 ou 2,
**caractérisée en ce que**
la commande rotative (3) s'appuie avec mobilité de course indépendamment de la coque de boîtier (5) sur le guide linéaire placé au niveau du banc de la machine (27).

5. Unité d'injection selon une des revendications précédentes,
**caractérisée en ce que**
la commande de levage (4) est composée d'un moteur à rotation comportant un carter de moteur constitué de la coque de boîtier (5) ainsi qu'une commande à broche à vis (21) installée en aval du moteur à rotation.

6. Unité d'injection selon une des revendications précédentes,
**caractérisée en ce que**
la coque de boîtier (5) et/ou la commande rotative (3) s'appuie par des paliers à rouleaux sur la voie de guidage respectivement associée (8 ; 24 ; 27).
